# EUROPEAN PATENT APPLICATION

(11) **EP 4 806 582 A1**
(43) Date of publication of application: **16.09.2026**
(21) Application number: 24899179.6
(22) Date of filing: 13.06.2024
(51) Int. Cl.: B23P 23/06, H01M 10/0587

(54) **ELECTRODE SHEET SLITTING SYSTEM AND METHOD**

(30) Priority: 04.12.2023 CN 202311650176
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: TU, Yinhang, Ningde, Fujian 352100 (CN); SHEN, Jianhua, Ningde, Fujian 352100 (CN)
(74) Representative: Lorenz Seidler Gossel Part. mbB
(86) International application number: PCT/CN2024/099010
(87) International publication number: WO 2025/118527

(57) **Abstract**

An electrode sheet slitting system (1000), comprising: an electrode sheet cutting device (200) used for slitting a first electrode sheet (110) to form a plurality of second electrode sheets (120), wherein the width of the first electrode sheet (110) is greater than the width of each second electrode sheet (120); an information acquisition module (300) used for acquiring information of the second electrode sheets (120); and a processor (700) used for obtaining the information and determining, according to the information, whether a deviation occurs in the second electrode sheets (120), wherein in the event of a deviation, the processor (700) performs deviation correction on the first electrode sheet (110). Also provided is an electrode sheet slitting method. The electrode sheet slitting system (1000) and method reduce the batch scrap of electrode sheets and the flow of defective electrode sheets into subsequent production processes.

## Description

### CROSS-REFERENCE TO RELATED APPLICATIONS

The present application claims priority to Chinese Patent Application No. 202311650176.7 filed on December 4, 2023 and entitled "ELECTRODE PLATE SLITTING SYSTEM AND METHOD", which is incorporated herein by reference in its entirety.

### TECHNICAL FIELD

The present application relates to the field of battery production technologies, and in particular, to a slitting system and method in a production process of electrode plates of a battery.

### BACKGROUND

A manufacturing process of electrode plates of a battery cell includes pre-processes such as slurry mixing, coating, cold pressing, pre-slitting, and die cutting. The coating process involves uniformly coating slurry onto a surface of a current collector, drying it to form positive and negative electrode plate strips, and then winding them up. After the coating process, the electrode plate strip enters the cold pressing process, where it is rolled by rollers to compact a porous coating layer and bond it firmly to a foil material, thereby obtaining an electrode plate with thickness and compaction density that meet specification requirements.

Electrode plates are typically conveyed using roller shafts or other instruments in the production process. Taking slitting of a battery cell electrode plate winding a battery as an example, the electrode plate is cut into two parts of the electrode plate by a cutter. After the two parts of the electrode plate obtained by cutting are separately wound up along upper and lower flat rollers, two parts of material rolls are obtained. A current slitting device relies on manual adjustments for width deviations and appearance defects of electrode plates, which cannot be performed in real time. This often leads to batch scrapping, affects the yield of subsequent production, and reduces production efficiency.

### SUMMARY

Therefore, the present application provides an electrode plate slitting system and slitting method, for real-time detection of an electrode plate deviation. In a production process of electrode plate slitting, a closed-loop automatic deviation rectification for electrode plates can be implemented to improve consistency of cell capacity and reduce the batch scrapping of electrode plates. This improves the electrode plate yield and production efficiency, ensures operator safety, and enhances battery performance. The present application includes the following technical solutions:
In one aspect, the present application provides an electrode plate slitting system, including: an electrode plate cutting apparatus, an information collection module, and a processor. The electrode plate cutting apparatus is configured to slit a first electrode plate into a plurality of second electrode plates, where a width of the first electrode plate is greater than that of the second electrode plate. The information collection module is configured to collect information about the second electrode plates. The processor is configured to acquire information and determine, according to the information, whether the second electrode plate has a deviation, and if the deviation has occurred, the processor is configured to perform deviation rectification on the first electrode plate.

The electrode plate slitting system proposed in the present application can detect information about electrode plates in real time in the electrode plate slitting process of a battery cell. Compared with manual inspection and manual deviation rectification, the present application reduces the batch scrapping of electrode plates. It can further reduce production costs such as labor and materials. In addition, contact between operators and machinery is minimized, thus ensuring operator safety.

In some implementations, the information collection module includes an image collection module.

Using the image collection module, it has advantages in both cost and performance compared with other information collection systems, is highly mature, and is easy to apply in industrial applications.

In some implementations, the image collection module is a charge-coupled device camera.

The charge-coupled device cameras are widely applied in industrial production for product quality inspection due to their advantages of high imaging quality, low noise, high sensitivity, and fast readout.

In some implementations, the electrode plate slitting system further includes a first roller shaft and a second roller shaft. The plurality of second electrode plates are sequentially numbered, where the first roller shaft and the second roller shaft are configured to transport odd-numbered second electrode plates and even-numbered second electrode plates after slitting, respectively.

Each of the first roller shaft and the second roller shaft conveys a plurality of second electrode plates. Using only two roller shafts for conveying in two directions saves system space and simplifies the structure compared with a design where each second electrode plate is conveyed in a separate direction by a separate roller shaft. Moreover, such a system is easier to manufacture.

In some implementations, the information collection module includes a first information collection submodule configured to collect information about the odd-numbered second electrode plates at the first roller shaft.

In some implementations, the information collection module further includes a second information collection submodule configured to collect information about the even-numbered second electrode plates at the second roller shaft.

The information collection module collects electrode plate information at the roller shaft, rather than collecting the information at other locations in an electrode plate conveying direction. Because the movement of the electrode plate at the roller shaft is relatively stable, the accuracy and quality of information collection can be improved.

In some implementations, the information about the second electrode plate includes a width of the second electrode plate, and correspondingly, the deviation includes a width deviation, where a width direction is a direction perpendicular to the conveying direction of the second electrode plate.

The width deviation information is easier to obtain and process than angular deviation information. Whether deviation rectification is needed is determined by determining the width deviation, which is less complex and easier to implement.

In some implementations, determining whether the width deviation has occurred includes: the processor calculating a deviation of the width of the second electrode plate relative to a standard width; and if the width deviation is greater than a lower threshold of the width deviation error, determining that a width deviation has occurred.

In some implementations, if the width deviation is less than an upper threshold of the width deviation error, the processor calculates a deviation rectification value, and accordingly, the processor performing deviation rectification on the first electrode plate includes performing deviation rectification on the first electrode plate according to the deviation rectification value.

An error in the width deviation of each second electrode plate is compared by using the determined standard width. The error is the deviation rectification value. The method is simple and easy for the processor to calculate the deviation rectification value and perform deviation rectification on the first electrode plate.

In some implementations, the system triggers an alarm if the width deviation error is greater than or equal to the upper threshold of the width deviation.

If the second electrode plate exceeds the upper threshold of the width error, it is considered a defective product. At this point, an alarm is triggered and the machine is stopped, allowing an operator to promptly handle the electrode plate that needs to be scrapped, thereby improving the production efficiency.

In some implementations, the system further includes a third roller shaft configured to convey the first electrode plate. Correspondingly, the information collection module further includes a third information collection submodule configured to collect information about the first electrode plate at the third roller shaft.

In some implementations, the first electrode plate includes a first surface and a second surface, and the third information collection submodule collects information about the first surface of the first electrode plate.

In some implementations, the second electrode plate includes a first surface and a second surface, and the first information collection submodule and the second information collection submodule respectively collect information about the second surface of the second electrode plate.

Compared with the solution of collecting information about both surfaces of each electrode plate, the above implementation can collect information about both the first surface and the second surface of the electrode plate completely, while also saving system space and reducing the number of information collection modules.

In some implementations, the information about the first electrode plate and/or the second electrode plate further includes appearance information. According to the appearance information, the processor is further configured to determine whether the first electrode plate and/or the second electrode plate has an appearance defect; and if the appearance defect has occurred, notify an alarm to trigger an alarm.

In the process of determining and performing deviation rectification, the appearance defect is detected, which improves the utilization rate of the information collection module. Real-time detection of the appearance defect reduces outflow of a defective electrode plate. An alarm is triggered timely when a defect occurs, making it easier for the operator to troubleshoot and locate a fault.

In some implementations, the information collection module further includes a light source configured to provide supplementary lighting for the image collection module. The light source is easy to adjust, which not only makes the acquired image clearer, but also allows for the acquisition of a plurality of frames of image information under different lighting conditions, thereby improving detection accuracy.

In some implementations, a straight line where a radius from a center of the first roller shaft to a contact point between the second electrode plate and the first roller shaft is located is a center line between a straight line from the image collection module to the contact point and a straight line from the light source to the contact point. Such arrangement facilitates the coordinated adjustment of the image collection module and the light source.

In another aspect, the present application provides an electrode plate slitting method, including: slitting a first electrode plate into a plurality of second electrode plates, where a width of the first electrode plate is greater than that of the second electrode plate; collecting information about the second electrode plates; acquiring the information and determining, according to the information, whether the second electrode plate has a deviation, and if the deviation has occurred, performing deviation rectification on the first electrode plate.

The electrode plate slitting method proposed in the present application detects the deviation of the electrode plate in real time in the electrode plate slitting process of the battery cell. Compared with manual inspection and manual deviation rectification, it reduces the batch scrapping of electrode plates, improves the yield of electrode plate slitting, reduces production costs such as labor and materials, and at the same time reduces the contact between operators and machinery, thus ensuring operator safety.

In some implementations, two roller shafts, namely a first roller shaft and a second roller shaft, are used to convey odd-numbered second electrode plates and even-numbered second electrode plates after slitting, respectively.

Compared with the method of conveying each second electrode plate in a different direction using a roller shaft, conveying the plurality of second electrode plates after slitting in two directions saves more system space and is easier to design.

In some implementations, collecting information about the second electrode plates includes: collecting information about the odd-numbered second electrode plates at the first roller shaft, and collecting information about the even-numbered second electrode plates at the second roller shaft.

Since the movement of the electrode plates at the roller shaft is relatively stable, collecting the information about the electrode plates at the roller shaft can improve the quality of information collection.

In some implementations, the information about the second electrode plate includes a width of the second electrode plate, and correspondingly, the deviation includes a width deviation, where a width direction is a direction perpendicular to the conveying direction of the second electrode plate.

The width deviation information is easier to obtain and process than angular deviation information. Whether deviation rectification is needed is determined by determining the width deviation, which is less complex and easier to implement.

In some implementations, the electrode plate slitting method further includes collecting information about the first electrode plate.

Before performing deviation rectification, an appearance defect of the electrode plate is detected first. This allows the operator to promptly handle a defective electrode plate, thereby improving the yield of production.

In some implementations, the electrode plate slitting method further includes: the information about the first electrode plate and/or the second electrode plate further including appearance information, determining, according to the appearance information, whether the first electrode plate and/or the second electrode plate has an appearance defect; and if the appearance defect has occurred, triggering an alarm.

The appearance defect is detected in the process of determining and rectifying the deviation, which is conducive to effective deviation rectification. Real-time detection of the appearance defect reduces the flow of defective products into subsequent processes, which is conducive to ensuring battery performance. An alarm is triggered timely when a defect occurs, making it easier for the operator to troubleshoot and locate a problem.

In some implementations, the appearance information includes the appearance information about first surfaces and second surfaces of the first electrode plate and the second electrode plate.

In some implementations, the appearance information includes the appearance information about the first surface of the first electrode plate and the appearance information about the second surface of the second electrode plate.

This allows for the complete collection of information about both the first surface and the second surface of the electrode plate, eliminating the need to collect information about both surfaces of the first electrode plate and each second electrode plate individually, thus reducing resource waste caused by redundant information collection.

The electrode plate slitting system and method proposed in the present application can realize a closed-loop automatic deviation rectification for electrode plates to improve the consistency of cell capacity. Therefore, the batch scrapping of electrode plates is reduced, and material costs are saved, thereby improving the electrode plate yield and the production efficiency. The appearance defect can further be monitored in real time, so as to reduce outflow of a defective electrode plate. In addition, an alarm is triggered and the machine is stopped when a defect occurs, making it easier for the operator to troubleshoot and locate a fault. This reduces operator contact with a production device and improves production safety.

### BRIEF DESCRIPTION OF THE DRAWINGS

In order to more clearly illustrate the technical solutions of the embodiments of the present application, the drawings required in the embodiments of the present application will be described briefly below. Apparently, the drawings described below depict merely some embodiments of the present application. For those of ordinary skill in the art, other drawings can also be obtained according to these drawings without any creative effort. In the drawings:
FIG. 1 is a schematic diagram of an electrode plate slitting system according to an embodiment of the present application;
FIG. 2 is a schematic diagram of an electrode plate slitting system according to another embodiment of the present application;
FIG. 3 is a schematic diagram of an electrode plate slitting system according to another embodiment of the present application;
FIG. 4 is a schematic diagram of an information collection module according to an embodiment of the present application;
FIG. 5 is a schematic diagram of an information collection module according to an embodiment of the present application;
FIG. 6A is a schematic diagram of a second electrode plate according to an embodiment of the present application;
FIG. 6B is a schematic diagram of another second electrode plate according to an embodiment of the present application;
FIG. 7 is a schematic diagram of an electrode plate slitting system according to another embodiment of the present application;
FIG. 8 is a flowchart of an electrode plate slitting method according to an embodiment of the present application;
FIG. 9 is a flowchart of an information collection method of an electrode plate slitting method according to an embodiment of the present application; and
FIG. 10 is a flowchart of a defect detection method of an electrode plate slitting method according to an embodiment of the present application.

List of reference numerals: 1000-Electrode plate slitting system, 110-First electrode plate, 120-Second electrode plate, 200-Electrode plate cutting apparatus, 300-Information collection module, 700-Processor, 310-Second information collection submodule, 320-First information collection submodule, 330-Third information collection submodule, 410-First roller shaft, 420-Second roller shaft, 430-Third roller shaft, 400-Deviation rectification module, 600-Marking mechanism, 800-Alarm, 301-Image collection module, 302-Light source.

### DETAILED DESCRIPTION

Embodiments of the present application are further described in detail below with reference to the accompanying drawings and embodiments. The following detailed description of the embodiments and the drawings are used to illustrate the principles of the present application by way of example, but should not be used to limit the scope of the present application, that is, the present application is not limited to the described embodiments.

In the description of the present application, it is to be noted that unless otherwise stated, "a plurality of" means more than two; in addition, the terms such as "first", "second" and "third" are only intended for the purpose of description, and shall not be construed as indicating or implying relative importance.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

The appearance of "plurality" in the present application refers to two or more (including two).

In the present application, the term "and/or" is only an association relationship for describing associated objects, indicating that there may be three relationships, for example, A and/or B may represent three situations: A exists alone, both A and B exist, and B exists alone. In addition, the character "/" in the present application generally means that the associated objects before and after it are in an "or" relationship.

In a production process of cell electrode plates of a battery, current slitting equipment cannot detect electrode plates in real time, and a deviation can easily lead to batch scrapping. Operators only conduct timed sampling inspections and visual checks of the electrode plates in the production process. When a dimensional deviation of the electrode plate is detected, manual deviation rectification is performed, which cannot be adjusted in real time. This often leads to batch scrapping and affects production efficiency.

The electrode plate slitting system and method proposed in the present application collects information of electrode plates in real time to perform deviation rectification on the electrode plates, thereby achieving a closed-loop automatic deviation rectification for the electrode plates. The batch scrapping of electrode plates is reduced, thereby improving the electrode plate yield and the production efficiency. The automatic detection of the slitting system replaces manual inspection, thereby reducing labor costs, improving product stability, and ensuring operator safety.

In the present application, the battery may include a lithium-ion secondary battery, a lithium-sulfur battery, a sodium-lithium-ion battery, a sodium-ion battery, a magnesium-ion battery, or the like, which is not limited in embodiments of the present application. A core component of the battery capable of achieving repeated charging and discharging functions is an electrode plate assembly in a battery cell. The electrode plate assembly includes an electrode plate and a separator. The electrode plate includes a positive electrode plate and a negative electrode plate. The separator is usually arranged between the positive electrode plate and the negative electrode plate to insulate the positive electrode plate and the negative electrode plate from each other. The material of the separator may be, e.g., PP (polypropylene) or PE (polyethylene). The battery cell works mainly relying on movement of metal ions between the positive electrode plate and the negative electrode plate.

The electrode plate includes a current collector and an active material layer. In a width direction of the electrode plate, the current collector includes a coated region coated with the active material layer and a bare foil region not coated with an active material layer. Tabs are cut from the current collector in the bare foil region. The tabs are metal conductors that lead positive and negative electrodes out of the cell of the battery, and are contact points during charging and discharging for the battery. In production practice, the bare foil region is also referred to as a "tab region". The positive electrode current collector may be aluminum foil, and the positive electrode active material layer includes a ternary material, lithium manganate, or lithium iron phosphate. The negative electrode current collector may be copper foil, and the negative electrode active material layer includes graphite or silicon.

Slitting refers to cutting a single electrode plate into a plurality of electrode plates in its width direction, according to the designed structure and specifications of the battery. Generally, for a wound battery, an electrode plate is slit into a plurality of electrode plates according to a designed width. For a laminated battery, before the electrode plate is cut into individual electrode plates, an electrode plate coil also needs to be slit first and then cut into the required size.

The electrode plate slitting system and method of the embodiments of the present application can be performed before a die-cutting process or after a die-cutting process. Die-cutting refers to cutting out tabs from the bare foil region of the electrode plate according to the design specifications of the tabs. There is a long conveyor belt path between the electrode plate slitting process and the die-cutting process, and therefore, in order to improve the quality of electrode plate slitting, it is necessary to perform deviation rectification on the electrode plate before slitting, so as to perform deviation rectification on the conveyor belt posture of the electrode plate.

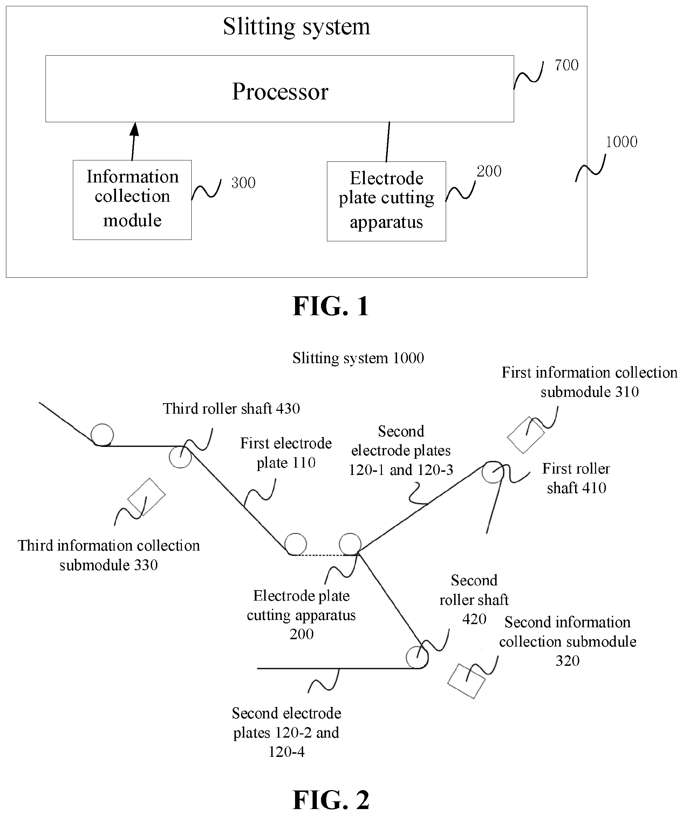

As shown in FIG. 1, the embodiments of the present application provide an electrode plate slitting system 1000, including: an electrode plate cutting apparatus 200, an information collection module 300, and a processor 700. The electrode plate cutting apparatus 200 is configured to slit a first electrode plate 110 into a plurality of second electrode plates 120, where a width of the first electrode plate 110 is greater than a width of the second electrode plate 120. The information collection module 300 is configured to collect information about the second electrode plates 120. The processor 700 is configured to acquire information about the second electrode plate 120 and determine, according to the information, whether the plurality of second electrode plates 120 have a deviation, and if the deviation has occurred, the processor 700 performs deviation rectification on the first electrode plate 110.

The electrode plate cutting apparatus 200 may be any mechanism capable of implementing electrode plate cutting. As shown in FIG. 2, the electrode plate cutting apparatus 200 is configured to slit the first electrode plate 110 into the plurality of second electrode plates 120. In some embodiments, the electrode plate cutting apparatus 200 may include a plurality of cutting members, with different cutting members configured to cut different regions of the electrode plate. For example, the plurality of cutting members act on centers of a plurality of bare foil regions or coated regions of the first electrode plate 110 to be slit, dividing the first electrode plate 110 into several second electrode plates 120 of the same width. Currently, main methods for cutting electrode plates of the battery are as follows: (1) disc shearing; (2) die punching; and (3) laser cutting. The quality and dimension data of cutting edges of the electrode plates may directly affect the performance and safety of the finished battery. Laser slitting, compared with disc shearing and die punching, has the advantages of high production efficiency and good process stability, and has been applied in the industrial production of battery electrode plate cutting. Correspondingly, the cutting members may include, but are not limited to, a cutting blade, a cutting head, a laser beam, and the like. The cutting members are configured to perform the above-mentioned slitting operation to complete the slitting of the electrode plate. In the embodiment of the present application, for ease of distinction, the electrode plate before slitting is referred to as the first electrode plate 110, and the electrode plate after slitting is referred to as the second electrode plate 120.

The information collection module 300 is always in the state of collecting information and may send the collected information to the processor 700 for processing in real time. The information collection module 300 includes at least one information collection submodule configured to collect information about the plurality of second electrode plates 120. The information collection module 300 may collect various types of feature information about the second electrode plate 120 in the slitting system 1000, such as shape, size, position, brightness, color, and texture. The information collection module 300 collects information in the following four methods, including but not limited to: (1) Infrared/thermal infrared sensing: An infrared sensor or thermal infrared camera is used to capture infrared or thermal infrared images that are invisible to human eyes. (2) Camera capture: A digital camera or video camera is used to capture images by scanning in a line by line or frame by frame manner. (3) Video collection: A continuous video stream is collected by a video camera or a webcam, and information about the electrode plate may be acquired by extracting image frames from the continuous video. (4) 3D scanning: Technologies such as structured light, time of flight (TOF), or stereo cameras are used to acquire three-dimensional shape and texture information of an object.

The structured light is a system structure consisting of a projector and a camera. After specific light information is projected by the projector onto a surface of an object and its background, information is then collected by the camera. This solution can calculate information such as position and depth of the object according to changes in a light signal caused by the object, and thus reconstruct the entire three-dimensional space. The TOF technology is a technique that uses the time it takes for an object, particle, or wave to travel a certain distance in a fixed medium (where the medium, distance, and time are all known or measurable), thereby further understanding certain properties of the particle or medium. A stereo camera refers to a camera capable of synchronously capturing images to obtain a stereopair. Accordingly, in some embodiments, the information collection submodule may be a (thermal) infrared sensor, a dedicated industrial camera, a digital X-ray imaging device, a video collection apparatus, a 3D scanning device, or a regular digital camera, a video camera, a mobile phone camera, or the like. In the embodiments of the present application, collecting the information about the second electrode plate 120 refers to acquiring the information about the second electrode plate 120 through the information collection module 300. This information includes all the necessary information that can be used to determine the deviation of the second electrode plate 120, including the shape, size, position, and other information of the second electrode plate 120.

In the embodiments of the present application, the processor 700 may be a Central Processing Unit (CPU) or an Application Specific Integrated Circuit (ASIC) configured to perform a plurality of different signal processing procedures. The processor 700 acquires, in real time, the electrode plate information collected by the information collection module 300, including relevant information that can determine the electrode plate deviation. After different signal processing steps, the processor 700 outputs a deviation determination result. The processor 700 further outputs a deviation rectification instruction to perform deviation rectification on the electrode plate.

The electrode plate deviation refers to that a deviation of the electrode plate width after slitting from the standard width exceeds a lower limit of an error threshold but does not exceed an upper limit of the error threshold. In this case, deviation rectification may be performed on the electrode plate to improve the width of the electrode plate after slitting. The processor 700, also known as an "industrial control computer," is configured to display a production status of a device and control the device to perform corresponding operations, and generally includes an upper computer and a lower computer. Conceptually, a controlling party and a service provider are upper computers, while a controlled party and a serviced party are lower computers. This may also be understood as a relationship between host computers and slave computers, and the master-slave relationship between the upper computer and the lower computer may be converted.

In the embodiments of the present application, after the upper computer acquires the information about the electrode plate, it performs calculation processing and sends a corresponding command to the lower computer. The lower computer then interprets the command into a corresponding timing signal to control a relevant device component and a driving apparatus. The lower computer reads device status data (usually analog quantities), converts it into digital signals, and feeds them back to the upper computer. Regarding the upper computer and the lower computer, the host computer/master computer/upper computer refers to a computer that can directly issue control commands, and is generally a workstation, touch screen, or another human machine interface device including both hardware and software.

In the embodiments of the present application, a screen of the upper computer will display various types of acquired information about the electrode plate, as well as a processing result of the information about the electrode plate, including a deviation result. The lower computer is a computer that directly controls the device and acquires the device status, and is generally a microcomputer such as a programmable logic controller (PLC) or a single-chip microcomputer/slave computer/lower computer. The PLC is a digital computing controller with a microprocessor and configured for automation control, which can load control instructions into a memory for storage and execution at any time. The PLC consists of functional units such as a CPU, an instruction and data memory, an input/output interface (I/O interface), a power supply, and an analog-to-digital (A/D) conversion, and includes various functions such as logic control, timing control, analog control, and multi-machine communication. The single-chip microcomputer is an integrated circuit chip that adopts the ultra-large-scale integrated circuit technology to integrate a CPU with a data processing capability, a random access memory (RAM), a read-only memory (ROM), a plurality of I/O interfaces, and various functions such as an interrupt system and a timer/counter (and may further include circuits such as a display driver circuit, a pulse width modulation circuit, an analog multiplexer, an A/D converter) onto a single silicon chip, forming a compact and complete microcomputer system.

In the embodiments of the present application, the deviation refers to the occurrence of a spatial deviation. The deviation of the second electrode plate 120 refers to that the second electrode plate 120 is cut off-center, that is, the region slit in its width direction is misaligned, which fails to meet slitting accuracy requirements. If the slitting continues according to the deviation, it will cause batch scrapping of the second electrode plates 120. This not only affects the yield of the slitting process. When the second electrode plates 120 with unqualified size accuracy flow into the subsequent winding or stacking process, if there is a situation such as a negative electrode plate not being able to completely wrap a positive electrode plate, the battery performance, such as the state of charge (SOC) of the cell, is further affected. In some embodiments, the deviation of the second electrode plate 120 may be understood as the position of the first electrode plate 110 being deviated relative to the position of the cutter, and the cutter not slitting from a central axis of a cutting area, resulting in the electrode plates after slitting being wider on one side and narrower on the other.

If it is determined that a deviation has occurred, the processor 700 performs deviation rectification on the deviation of the first electrode plate 110. In the embodiments of the present application, when it is determined that a deviation has occurred and a deviation amount is less than or equal to an upper threshold of a deviation error, the processor 700 calculates the deviation error as a deviation rectification value and performs deviation rectification on the first electrode plate 110 according to the deviation rectification value. The deviation rectification generally refers to a technical operation of keeping side surfaces of a roll material neat and consistent in a winding process of the roll material. In the embodiments of the present application, the deviation rectification refers to an operation of adjusting the position of the first electrode plate 110 after a deviation has occurred, so that the width of each region slit in the width direction can remain consistent during the slitting. In some embodiments, adjusting the position of the first electrode plate 110 includes adjusting its position in the slitting system 1000, such as its angle and width direction, and then moving the first electrode plate 110 so that the cutter position is aligned with the central axis of a cutting position.

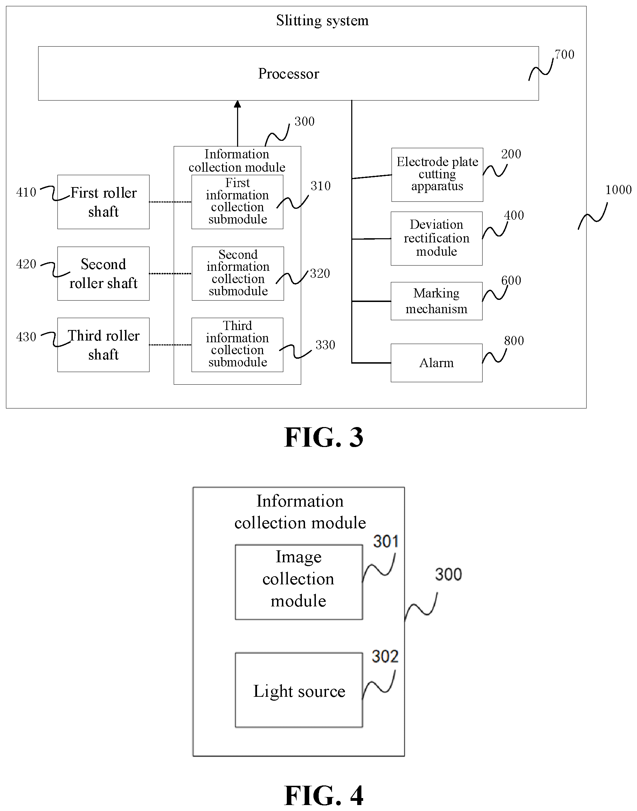

In some embodiments, as shown in FIG. 3, the slitting system 1000 further includes a deviation rectification module 400 configured to adjust the position of the electrode plate according to the control of the processor 700. Correspondingly, the processor 700 performs deviation rectification on the first electrode plate 110 by controlling the deviation rectification module 400 to perform deviation rectification on the first electrode plate 110. The deviation rectification module 400 is configured to perform deviation rectification on the first electrode plate 110 according to the control command of the processor 700. The deviation rectification module 400 typically includes a deviation rectification mechanism and a motor. The deviation rectification mechanism is configured with different specifications according to different strokes and thrusts, and is configured to receive a deviation rectification instruction from the processor 700 and control the motor to drive the deviation rectification mechanism to perform a deviation rectification operation.

In some embodiments, the deviation rectification mechanism may include a support frame, a first deviation rectification roller, and a second deviation rectification roller to perform deviation rectification, thereby maintaining the relatively consistent shape of the second electrode plates 120 after the slitting. The shape and material of the support frame are not limited. Both the first deviation rectification roller and the second deviation rectification roller are rotatably arranged on the support frame. The first deviation rectification roller and the second deviation rectification roller are arranged opposite each other, and the electrode plate passes through a roller gap between the first deviation rectification roller and the second deviation rectification roller. The first deviation rectification roller and the second deviation rectification roller work together to clamp the electrode plate and adjust the position of the electrode plate in the axial direction of the first deviation rectification roller to achieve deviation rectification. After deviation rectification, the first electrode plate 110 is then sent to the electrode plate cutting apparatus 200 for slitting. The first deviation rectification roller and the second deviation rectification roller are arranged in the conveying direction of the first electrode plate 110. The first electrode plate 110 includes a first surface and a second surface that are opposite to each other. The first deviation rectification roller and the second deviation rectification roller are arranged on both sides of the first electrode plate 110, that is, the first deviation rectification roller is in contact with the first surface and the second deviation rectification roller is in contact with the second surface. The first deviation rectification roller and the second deviation rectification roller are clamped between the first surface and the second surface of the electrode plate and the position of the first electrode plate 110 in the axial direction of the first deviation rectification roller is adjusted to calibrate the position of the first electrode plate 110 during slitting.

The electrode plate slitting system 1000 proposed in the embodiments of the present application can detect the information about the electrode plates in real time in the slitting process of electrode plates of cells of the battery. Compared with manual inspection and manual deviation rectification, the batch scrapping of electrode plates is reduced, thereby improving the yield of slitting of the electrode plates. It further reduces production costs such as labor and materials, while minimizing contact operators and machinery, thus ensuring operator safety.

In some implementations, as shown in FIG. 4, the information collection module 300 includes an image collection module 301.

In some implementations, the image collection module 301 is a charge-coupled device camera.

The image collection module 301 refers to any apparatus that acquires information in the form of images, such as a professional industrial camera, a digital camera, a video camera, and a mobile phone camera. In some embodiments, a charge-coupled device (CCD) camera is capable of converting light into charges and storing and transferring those charges. The CCD camera may also extract stored charges to change the voltage. CCD cameras are widely applied in industry due to their high color reproduction accuracy, small size, light weight, immunity to magnetic fields, and resistance to vibration and impact. A CCD camera converts a pixel value of a light signal into an electrical signal by scanning the pixel value of each pixel on an electrode plate, and then converts the electrical signal into a digital signal through analog-to-digital conversion.

Using the image collection module 301, it has advantages in both cost and performance compared with other information collection systems. Furthermore, the image collection technology is highly mature and easy to apply in industry. Compared with other image collection devices, the CCD camera offers advantages such as high imaging quality, low noise, high sensitivity, and fast readout, resulting in high detection efficiency and accuracy.

In some embodiments, as shown in FIG. 4, the information collection module 300 typically further includes a light source 302 configured to provide supplementary lighting for the image collection module 301. By adjusting the positions and angles of the image collection module 301 and the light source 302 relative to the electrode plate, and adjusting the brightness of the light source, a plurality of frames of images under detection at different locations, orientations, and exposure rates may be obtained for subsequent detection.

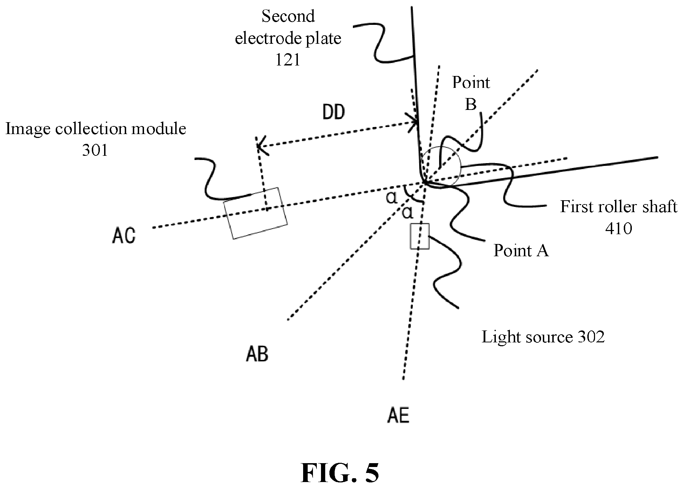

In some embodiments, as shown in FIG. 5, a straight line AB passes through a center point B of a first roller shaft 410 and a contact point A between a second electrode plate 121 and the first roller shaft 410, and is a center line between a straight line AC from the image collection module 301 to the contact point A and a straight line AE from the light source 302 to the contact point A. In other words, an included angle between the center line AB and the straight line AB from the image collection module 301 to the contact point A is equal to an included angle between the center line and the straight line AE from the light source 302 to the contact point A, that is, ∠α. In some embodiments, ∠α may be 30°, and a distance DD from the image collection module 301 to the contact point may be 590 mm, referred to as a light source distance.

Selecting the image collection module 301 to collect information can be used not only to detect a deviation of the electrode plate, but also to detect an appearance defect of the electrode plate. Therefore, there is no need to set up another measuring device or image collection device separately, thereby saving costs and system space. The light source 302 is easy to adjust, which not only makes the acquired image clearer, but also allows for the acquisition of a plurality of frames of image information under different lighting conditions, thereby improving detection accuracy.

Electrode plates are typically stored and transported in roll form in the manufacturing process, for coating, cold pressing, slitting, and die cutting. To improve the production efficiency, an electrode plate roll generally includes a plurality of active material coated regions and bare foil regions arranged repeatedly in a direction perpendicular to a conveying direction of the electrode plate, that is, the width direction of the electrode plate. As described above, the coated region may be a region where the current collector is coated with the active material layer. The bare foil region is the current collector that is not coated with an active material layer.

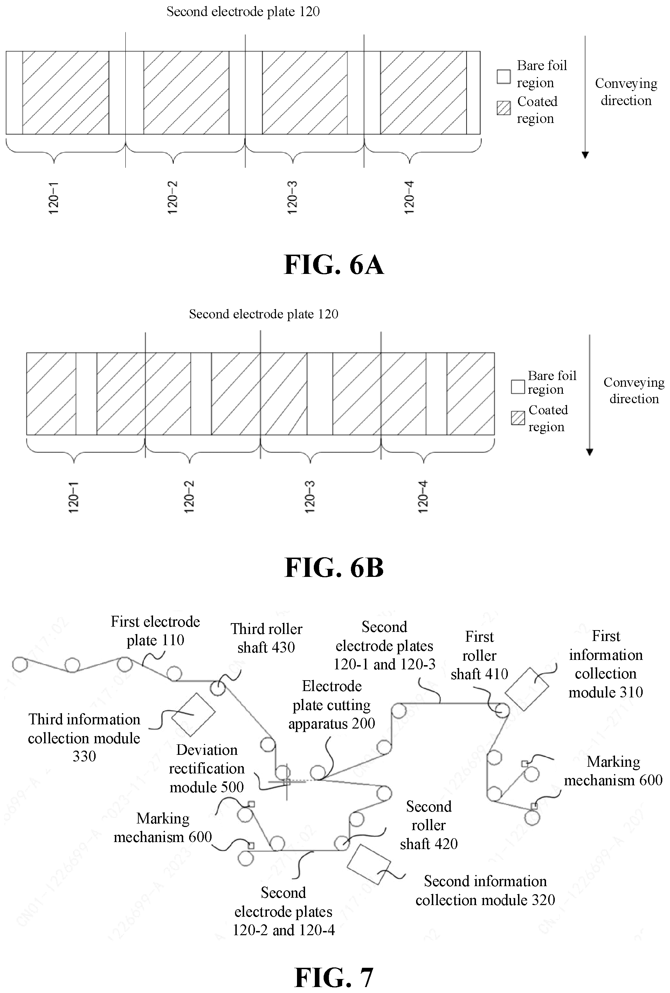

In some embodiments, depending on different cutting locations, the slitting may be performed from the center line of the bare foil region or the coated region. FIG. 6A is a schematic diagram of obtaining a plurality of second electrode plates 120 by slitting from a bare foil region. FIG. 6B is a schematic diagram of obtaining a plurality of second electrode plates 120 by slitting from a coated region. As shown in FIG. 6A, the second electrode plate 120 may include a coated region and bare foil regions on both sides of the coated region in the width direction; or as shown in FIG. 6B, it may include a bare foil region and coated regions on both sides of the bare foil region. The electrode plate cutting apparatus 200 slits the first electrode plate 110 from a center line of a plurality of bare foil regions (FIG. 6A) or coated regions (FIG. 6B) that are repeatedly arranged in the width direction, to obtain a plurality of second electrode plates 120-1, 120-2, 120-3, and 120-4 of the required specifications. The plurality of second electrode plates 120 are numbered sequentially. After being sequentially numbered, the plurality of second electrode plates 120 are divided into an odd-numbered path and an even-numbered path for conveying.

In some embodiments, the slitting system 1000 further includes a plurality of roller shafts. As a transmission assembly of the slitting system 1000, the roller shafts are arranged at different positions in the conveying direction. The transmission assembly is a component or mechanism that transmits power from one part of a machine to another, causing the machine or its parts to move or operate. Because of the friction between the roller shaft and the second electrode plate 120, self-rotation of the roller shaft can drive the second electrode plate 120 to rotate, so that the second electrode plate 120 is continuously conveyed forward in the conveying direction.

In some embodiments, as shown in FIG. 2 and FIG. 3, the slitting system 1000 includes two roller shafts, namely a first roller shaft 410 and a second roller shaft 420. The first roller shaft 410 is configured to convey a plurality of odd-numbered second electrode plates after slitting, such as 120-1 and 120-3, while the second roller shaft 420 is configured to convey a plurality of even-numbered second electrode plates after slitting, such as 120-2 and 120-4. In other embodiments, the quantity of roller shafts is the same as the quantity of second electrode plates 120 after slitting, and each roller shaft conveys only one second electrode plate 120. Compared with the design of conveying each second electrode plate 120 in a different direction using a different roller shaft, conveying the plurality of second electrode plates 120 after slitting in two directions saves more system space and is easier to design. Each second electrode plate 120 is conveyed by a different roller shaft in a different direction, which has advantages such as more precise conveying.

In some embodiments, as shown in FIG. 2 and FIG. 3, the information collection module 300 includes a first information collection submodule 310 configured to collect information about the odd-numbered second electrode plate 120-1 at the first roller shaft 410. In other embodiments, the information collection module 300 further includes a second information collection submodule 320 configured to collect information about the even-numbered second electrode plate 120-2 at the second roller shaft 420. The first information collection submodule 310 and the second information collection submodule 320 generally include the same information collection apparatus.

In some embodiments, the first information collection submodule 310 and the second information collection submodule 320 may be industrial cameras configured to acquire information about the second electrode plate 120. The industrial camera is characterized by high frame rate, comprehensive information collection, and high imaging quality. The camera is suitable for a high-quality image processing algorithm, with stable performance. The camera is easy to install, and has a compact and sturdy structure that is not easily damaged. The camera can work continuously for a long time and can be used in a harsh environment.

In some embodiments, each second electrode plate 120 corresponds to an information collection submodule, thereby completely acquiring information about all the second electrode plates 120 after slitting.

The information collection module 300 collects electrode plate information at the roller shaft, rather than collecting the information at other locations in the electrode plate conveying direction. This is because the movement of the electrode plate at the roller shaft is relatively stable, which can improve the quality of information collection.

In some embodiments, the information about the second electrode plate 120 includes a width of the second electrode plate 120, and correspondingly, the processing 700 determining the deviation includes determining whether a width deviation has occurred, where a width direction is a direction perpendicular to the conveying direction of the second electrode plate 120.

In some embodiments, the processor 700 determines whether a width deviation has occurred by comparing an error between the width of the second electrode plate 120 after slitting and a standard width, including: determining the standard width of the second electrode plate 120, including a standard bare foil region width and a standard coated region width; calculating the deviation of the width of each second electrode plate 120 relative to the standard width; if the width deviation is less than or equal to a lower threshold of a width deviation error, determining that no width deviation has occurred; and if the width deviation is greater than the lower threshold of the width deviation error, determining that a width deviation has occurred. For the two forms of the second electrode plate 120 shown in FIG. 6A and FIG. 6B, the standard width refers to the width of the bare foil region or coated region of any edge of the electrode plate as the standard width of the electrode plate, according to the electrode plate material. For the second electrode plate 120 shown in FIG. 6A, the cutting position is the center line of each bare foil region, and the standard width is the standard bare foil region width. Correspondingly, for the second electrode plate 120 shown in FIG. 6B, the standard width is the standard coated region width. In some embodiments, when the slitting position is the bare foil region, the lower threshold for the width deviation error of the bare foil region is 1 mm, and an upper threshold is 2 mm. In some embodiments, when the slitting position is the coated region, the lower threshold for the width deviation error of the coated region is 0.5 mm, and the upper threshold is 1 mm.

The width deviation information is easier to obtain and process than angular deviation information. Whether deviation rectification is needed is determined by determining the width deviation, which is less complex and easier to implement.

In some embodiments, the slitting system 1000 further includes: when it is determined that a deviation has occurred, the processor 700 further includes: if the width deviation is greater than the upper threshold of the width deviation error, the processor 700 notifies an alarm 800 to trigger an alarm. If the width deviation exceeds the upper threshold of the width deviation error, this part of second electrode plates 120 after slitting are defective products and need to be inspected and handled by operator. The alarm prompts an operator to stop the machine and handle the defective products before the slitting system 1000 resumes operation. The processor 700 notifies, by outputting an alarm command, the alarm 800 to trigger an alarm. In some embodiments, the alarm 800 may include an alarm indicator and/or a buzzer. When the alarm 800 is triggered, the alarm indicator will flash and/or the buzzer will sound. The alarm may promptly alert the operator to find and address a width deviation problem of electrode plates, thereby reducing an electrode plate defect rate and improving the production efficiency.

In addition, in some embodiments, the processor 700 further includes determining whether the coated region is misaligned before determining whether a deviation has occurred. The processor 700 determines the misalignment of the coated region by comparing coating positions of the first surface and the second surface of the first electrode plate 110. The position deviation error is defined as a distance error from the edge of the coated region on the first surface relative to the second surface to the edge of the electrode plate. If the position deviation error is greater than a misalignment threshold, the width deviation determination will no longer be performed. The processor 700 notifies the alarm 800 to trigger an alarm and stop the machine, so as to process this part of electrode plates. If the position deviation error of the coated region is less than the misalignment threshold, the processor 700 continues to determine the width deviation. In some embodiments, for a plurality of second electrode plates 120 similar to those shown in FIG. 6B, the processor 700 further includes determining whether the coated region of each second electrode plate 120 after slitting is misaligned. The processor 700 determines whether the coated region of the second electrode plate 120 is misaligned, which may be done by referring to the determination of misalignment of the coated region of the first electrode plate 110. In some embodiments, the misalignment error threshold is 0.5 mm. Before determining whether a width deviation has occurred, it is determined whether the coated region has been misaligned. This allows for timely inspection and processing of defective electrode plates, thereby reducing resource waste in the slitting system 1000.

As shown in FIG. 2 and FIG. 3, in some embodiments, the slitting system 1000 further includes a third roller shaft 430 configured to convey the first electrode plate 110. Correspondingly, the information collection module 300 further includes a third information collection submodule 330 configured to collect information about the first electrode plate 110 at the third roller shaft 430.

The third roller shaft 430, as one of the transmission assemblies of the slitting system 1000, is consistent with the first roller shaft 410 and the second roller shaft 420. The third information collection submodule 330 is consistent with other information collection submodules, which facilitates processing and manufacturing.

The purpose of collecting the information about the first electrode plate 110 is to detect the appearance defect of the electrode plate before deviation rectification, so as to deal with defective electrode plates in a timely manner and improve the yield.

The electrode plate includes a first surface and a second surface, i.e., two sides, and misalignment and defect detection can be performed on each surface. In some embodiments, information about the first surface of the first electrode plate 110 may be collected by the third information collection submodule 330. The first information collection submodule 310 and the second information collection submodule 320 respectively collect information about the second surface of the second electrode plate 120. This allows for the complete collection of the information about both the first surface and the second surface of the electrode plate, while also saving system space and reducing the quantity of information collection modules 300.

In some embodiments, two information collection submodules may be used to acquire the information about the first surface and the second surface of the first electrode plate 110, respectively, so that the appearance defects of the electrode plate may be completely detected before slitting.

In some embodiments, more information collection submodules may be used to acquire the information about the first surface and the second surface of each second electrode plate 120, which can also completely detect the appearance defects and deviation of the electrode plate.

In some embodiments, the information about the first electrode plate 110 and/or the second electrode plate 120 may also include appearance information. according to the appearance information, the processor 700 is further configured to determine whether there are appearance defects in the first electrode plate 110 and/or the plurality of second electrode plates 120; and if appearance defects are found, notify the alarm 800 to trigger an alarm.

The appearance information refers to information such as shape and brightness of the electrode plate, which corresponds to different appearance defects. The appearance defects include wrinkles, bumps, breaks, decarburization due to bubbles, missed coating, missing metal, dark marks, and other defects on the surface of the electrode plate. In some embodiments, the shape information corresponds to defects such as wrinkles, bumps, breaks, decarburization due to bubbles, and missed coating, while the brightness information corresponds to defects such as missing metal and dark marks.

In some embodiments, the processor 700 may determine these appearance defects using an image processing algorithm. In some embodiments, the image processing algorithm may employ a deep learning technique. A plurality of frames of images under detection at different locations, orientations, and exposure rates are acquired by the plurality of image collection modules 301 at different orientations and the light source 302. Then, based on an image template of a product under detection, the plurality of frames of images under detection are filtered to obtain a target image under detection containing the product under detection. When defect detection begins, the processor 700 receives a plurality of frames of images under detection of the electrode plate under detection uploaded by the image set module 301. The target image under detection is input into a pre-trained defect detection model, where the pre-trained defect detection model is trained by a large amount of sample image data of defects of various shapes, and a detection result is output by the defect detection model, where the detection result includes defect data such as defect type data, defect size data, and defect location data. Features such as texture, color, and shape of the surface of the electrode plate are usually quite complex, and defect forms that appear are also diverse. The deep learning technique can learn abstract features of defects according to defect sample data of the electrode plate, thereby accurately detecting parts of the electrode plate that are similar in shape to the defect samples, thereby improving the accuracy and precision of defect detection.

In some embodiments, after determining that an appearance defect has occurred, the processor 700 outputs an alarm command for the appearance defect, notifying the alarm 800 to trigger an alarm.

In some embodiments, as shown in FIG. 3, the slitting system 1000 further includes a marking mechanism 600 configured to print and affix a defect label to the appearance defect of the first electrode plate 110 and/or the second electrode plate 120. After determining that the first electrode plate 110 and/or the second electrode plate 120 has an appearance defect, the processor 700 outputs a labeling signal corresponding to the defect and controls the marking mechanism 600 to affix the corresponding defect label at the defect position of the first electrode plate 110 and/or the second electrode plate 120.

In some cases, a plurality of measuring apparatuses are arranged to measure and rectify the deviation of the two electrode plates obtained by slitting, without considering the detection of appearance defects, which is unable to achieve automatic deviation rectification and appearance defect detection at the same time. Separating the deviation detection and the defect detection results in low system integration and a single detection method, making it unsuitable for deviation detection and defect detection of a plurality of electrode plates obtained by slitting. In some embodiments of the present application, the appearance defect is detected in the process of determining and rectifying a deviation, which improves the utilization rate of the information collection module 300. It enables real-time detection of appearance defects without the need for manual periodic sampling inspection, thereby reducing the inflow of defective products into subsequent processes and helping ensure battery performance. An alarm is triggered promptly when defects are detected, thereby facilitating engineers in troubleshooting and locating problems.

As shown in FIG. 7, the present application provides another slitting system 1000. Compared with the slitting system 1000 shown in FIG. 2, a transmission assembly in this embodiment includes more roller shafts for conveying the electrode plate roll. For the sake of brevity, the parts that are the same as those in the previous embodiment will not be repeated here.

A plurality of roller shafts are arranged at different positions in the conveying direction of the slitting system 1000. The plurality of roller shafts are arranged at a position where the electrode plate roll enters the slitting system. After unwinding, the roll is conveyed in the slitting system in the form of the first electrode plate 110. A plurality of roller shafts are arranged on conveying paths of the second electrode plates 120 to form irregular conveying paths. A roller shaft is arranged at the end of the conveying path of the second electrode plate 120 to rewind the plurality of second electrode plates 120s obtained by slitting.

The electrode plate slitting system 1000 proposed in this embodiment can not only detect a deviation and appearance defects in real time, but also realize the unwinding and rewinding of electrode plate rolls, and improve the stability of electrode plate conveying on the roller shafts and the space utilization rate.

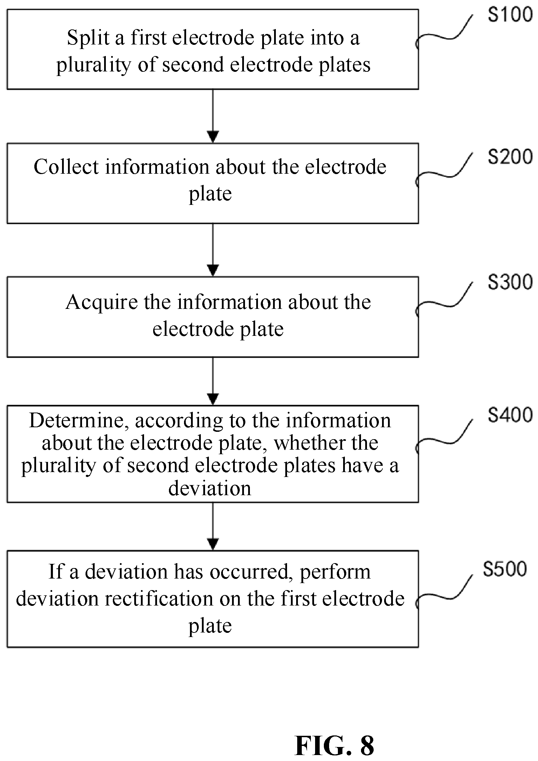

As shown in FIG. 8, the embodiments of the present application further provide an electrode plate slitting method, including:
S100: slitting a first electrode plate into a plurality of second electrode plates, where a width of the first electrode plate is greater than that of the second electrode plate; S200: collecting information about the second electrode plates; S300: acquiring the information and, according to the information, performing S400: determining whether the second electrode plate has a deviation; and S500: if the deviation has occurred, performing deviation rectification on the first electrode plate.

Determination is a thought process of affirming or denying a situation. Determining whether the electrode plate has a deviation after slitting is determining whether it is slit off-center. A determination result includes two results: a deviation has occurred and no deviation occurs.

The electrode plate slitting method proposed in the embodiments of the present application detects the deviation of the electrode plates in real time in the slitting process of electrode plates of cells of the battery. Compared with manual inspection and manual deviation rectification, the batch scrapping of electrode plates is reduced, thereby improving the yield of slitting of the electrode plates. It can further reduce production costs such as labor and materials, while minimizing contact between operators and machinery, thus ensuring operator safety.

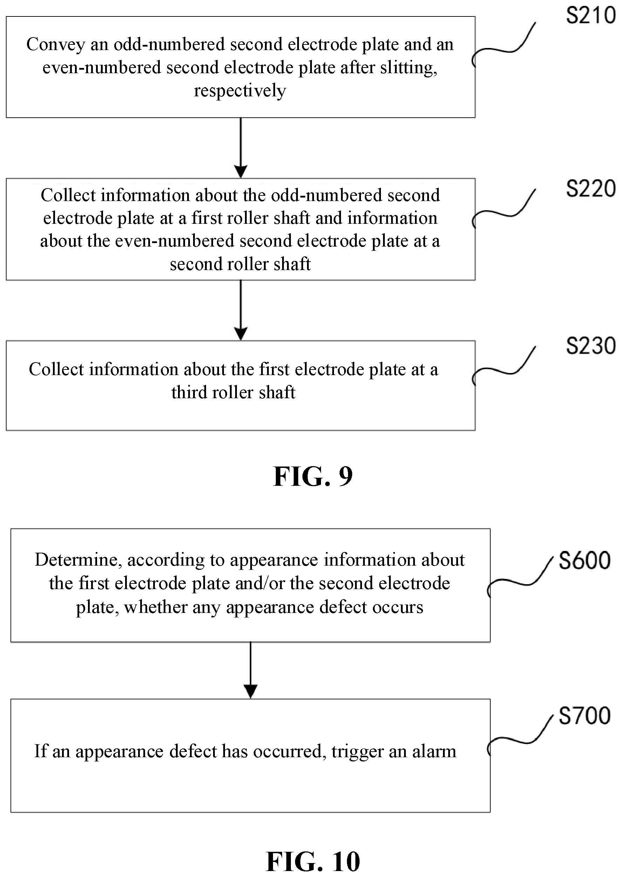

As shown in FIG. 9, in some embodiments, the electrode plate slitting method includes: using two roller shafts, namely a first roller shaft 410 and a second roller shaft 420, to perform S210: conveying odd-numbered second electrode plates and even-numbered second electrode plates after slitting, respectively.

Compared with the method of conveying each second electrode plate 120 in a different direction, conveying the plurality of second electrode plates 120-1 and 120-2 after slitting in two directions saves more system space and is easier to design.

As shown in FIG. 9, in some embodiments, S200 of collecting the information about the second electrode plates include:
S220: collecting information about the odd-numbered second electrode plates at a first roller shaft and information about the even-numbered second electrode plates at a second roller shaft.

An information collection module 300 is used to collect the information about the second electrode plates 120. The first information collection submodule 310 is used to collect the information about the second electrode plate 120-1, and the second information collection submodule 320 is used to collect the information about the second electrode plate 120-2. Since the movement of the electrode plates at the roller shaft is relatively stable, collecting the information about the electrode plates at the roller shaft can improve the quality of information collection.

In some embodiments, the information about the second electrode plate 120 includes a width of the second electrode plate 120, and correspondingly, the deviation includes a width deviation, where a width direction is a direction perpendicular to the conveying direction of the second electrode plate 120. According to the aforementioned method, by comparing the width of the second electrode plate 120 with the standard width, it can be determined whether the second electrode plate 120 has a width deviation. The width deviation information is easier to obtain and process than angular deviation information. Whether deviation rectification is needed is determined by determining the width deviation, which is less complex and easier to implement.

As shown in FIG. 9, in some embodiments, the electrode plate slitting method further includes S230: collecting the information about the first electrode plate at a third roller shaft. The information about the first electrode plate 110 is collected by a third information collection submodule 330. The purpose of collecting the information about the first electrode plate 110 is to detect the appearance defect of the electrode plate before deviation rectification. This allows an operator to promptly handle a defective electrode plate, thereby improving the yield of production.

As shown in FIG. 10, in some embodiments, the electrode plate slitting method further includes: the information about the first electrode plate 110 and/or the second electrode plate 120 further including appearance information, and according to the appearance information, performing S600: determining whether the first electrode plate and/or the second electrode plate has an appearance defect; and S700: if the appearance defect has occurred, triggering an alarm.

The appearance defect is detected in the process of determining and rectifying the deviation, which is conducive to effective deviation rectification. It enables real-time detection of appearance defects without the need for manual periodic sampling inspection, thereby reducing the inflow of defective products into subsequent processes and helping ensure battery performance.

In some embodiments, the appearance information includes the appearance information about first surfaces and second surfaces of the first electrode plate 110 and the second electrode plate 120. In some embodiments, the appearance information includes the appearance information about the first surface of the first electrode plate 110 and the appearance information about the second surface of the second electrode plate 120.

This allows for the complete collection of information about both the first surface and the second surface of the electrode plate, eliminating the need to collect information about both surfaces of the first electrode plate 110 and each second electrode plate 120 individually, thus reducing resource waste caused by redundant information collection.

## Claims

1. An electrode plate slitting system (1000), comprising:
an electrode plate cutting apparatus (200) configured to slit a first electrode plate (110) into a plurality of second electrode plates (120), wherein a width of the first electrode plate (110) is greater than a width of the second electrode plate (120);
an information collection module (300) configured to collect information about the second electrode plates (120); and
a processor (700) configured to acquire the information and determine, according to the information, whether the second electrode plates (120) have a deviation, and if the deviation has occurred, the processor (700) being configured to perform deviation rectification on the first electrode plate (110).

2. The system (1000) according to claim 1, wherein the information collection module (300) comprises an image collection module (301).

3. The system (1000) according to claim 2, wherein the image collection module (301) is a charge-coupled device camera.

4. The system (1000) according to any one of claims 1 to 3, wherein the system (1000) further comprises a first roller shaft (410) and a second roller shaft (420), and the first roller shaft (410) and the second roller shaft (420) are configured to convey an odd-numbered second electrode plate (120-1) and an even-numbered second electrode plate (120-2) after slitting, respectively.

5. The system (1000) according to claim 4, wherein the information collection module (300) comprises a first information collection submodule (310) configured to collect information about the odd-numbered second electrode plate (120-1) at the first roller shaft (410).

6. The system (1000) according to claim 5, wherein the first information collection submodule (310) is configured to collect information about a second surface of the odd-numbered second electrode plate (120-1).

7. The system (1000) according to any one of claims 4 to 6, wherein the information collection module (300) further includes a second information collection submodule (320) configured to collect information about the even-numbered second electrode plate (120-2) at the second roller shaft (420).

8. The system (1000) according to claim 7, wherein the second information collection submodule (320) is configured to collect information about a second surface of the even-numbered second electrode plate (120-2).

9. The system (1000) according to any one of claims 1 to 8, wherein the information about the second electrode plate (120) comprises a width of the second electrode plate (120), and correspondingly, the deviation comprises a width deviation, wherein a direction of the width is a direction perpendicular to a conveying direction of the second electrode plate (120).

10. The system (1000) according to any one of claims 1 to 9, wherein the slitting system (1000) further comprises a third roller shaft (130) configured to convey the first electrode plate (110), and correspondingly, the information collection module (300) further comprises a third information collection submodule (330) configured to collect information about the first electrode plate (110) at the third roller shaft (130).

11. The system (1000) according to claim 10, wherein the third information collection submodule (330) is configured to collect information about a first surface of the first electrode plates (110).

12. The system (1000) according to any one of claims 1 to 11, wherein the information about the first electrode plate (110) and/or the second electrode plate (120) further comprises appearance information, and the processor (700) is further configured to determine, according to the appearance information, whether the first electrode plate (110) and/or the second electrode plate (120) has an appearance defect; and if the appearance defect has occurred, notify an alarm (800) to trigger an alarm.

13. An electrode plate slitting method, comprising:
slitting a first electrode plate into a plurality of second electrode plates, wherein a width of the first electrode plate is greater than a width of the second electrode plate;
collecting information about the second electrode plates; and
acquiring the information and determining, according to the information, whether the second electrode plate has a deviation, and if the deviation has occurred, performing deviation rectification on the first electrode plate.

14. The electrode plate slitting method according to claim 13, wherein before the slitting the first electrode plate into the plurality of second electrode plates, the method further comprises:
collecting information about the first electrode plate;
in a case of determining, according to the information about the first electrode plate, that no appearance defects have occurred, performing the step of slitting the first electrode plate into the plurality of second electrode plates;
in a case of determining, according to the information about the first electrode plate, that an appearance defect has occurred, notifying an alarm to trigger an alarm.

15. The electrode plate slitting method according to claim 13 or 14, wherein the acquiring the information and determining, according to the information, whether the second electrode plate has a deviation comprises:
acquiring the information;
in a case of determining, according to the information, that the second electrode plates have no appearance defects, performing the step of determining, according to the information, whether the second electrode plate has a deviation; and
in a case of determining, according to the information, that an appearance defect has occurred on the second electrode plates, notifying the alarm to trigger an alarm.

16. The electrode plate slitting method according to any one of claims 13 or 15, wherein the information about the second electrode plate comprises the width of the second electrode plate, and determining whether the second electrode plate has a deviation comprises:
calculating a deviation of the width of the second electrode plate relative to a standard width; and
if the deviation of the width is greater than a lower threshold of a width deviation error, determining that a width deviation has occurred on the second electrode plate.

17. The electrode plate slitting method according to claim 16, wherein performing deviation rectification on the first electrode plate comprises:
calculating a deviation rectification value if the width deviation is less than an upper threshold of the width deviation error; and
performing deviation rectification on the first electrode plate according to the deviation rectification value.
